## Europäisches Patentamt

## European Patent Office

## Office européen des brevets

(19)

(11) Numéro de publication : **0 160 028**
**B1**

(12) # FASCICULE DE BREVET EUROPÉEN

(45) Date de publication du fascicule du brevet :
05.04.89

(51) Int. Cl.⁴ : **G 06 F 12/14**

(21) Numéro de dépôt : **84903808.8**

(22) Date de dépôt : **16.10.84**

(86) Numéro de dépôt international :
**PCT/FR 84/00231**

(87) Numéro de publication internationale :
**WO/8501815 (25.04.85 Gazette 85/10)**

(54) DISPOSITIF ET PROCEDE POUR LE STOCKAGE RAPIDE ET STABLE D'INFORMATIONS.

(30) Priorité : **17.10.83 FR 8316488**

(43) Date de publication de la demande :
**06.11.85 Bulletin 85/45**

(45) Mention de la délivrance du brevet :
**05.04.89 Bulletin 89/14**

(84) Etats contractants désignés :
**AT BE CH DE GB LI LU NL SE**

(56) Documents cités :
**EP--A-- 0 067 227**
**FR--A-- 1 436 170**
**US--A-- 3 480 916**
**US--A-- 3 825 903**
**US--A-- 4 120 030**
**US--A-- 4 293 910**
D.J.KUCK: "The structure of computers and computations", vol. 9, pp. 393-399, J. Wiley & SONS, New York, US
Communications of the ACM, vol. 15, no. 3, March 1972, pp. 157-170, SCHROEDER et al.: "A hardware architecture for implementing protection rings"
IBM Technical Disclosure Bulletin, vol. 20, no. 10, March 1978, pp. 4071-4072, CHAMOFF et al.: "Nonvolatile totals implementation"

(73) Titulaire : **INRIA INSTITUT NATIONAL DE RECHERCHE EN INFORMATIQUE ET EN AUTOMATIQUE**
**Domaine de Voluceau**
**Rocquencourt F-78150 Le Chesnay (FR)**

(72) Inventeur : **BANATRE, Michel, Pierre, Patrice, Alfred**
**La Masse**
**F-35111 La Fresnais (FR)**
Inventeur : **BANATRE, Jean-Pierre, Auguste, François, Joseph**
**La Masse**
**F-35111 La Fresnais (FR)**
Inventeur : **PLOYETTE, Florimond, Etienne, Albéric**
**45, rue Saint Melaine**
**F-35000 Rennes (FR)**
Inventeur : **DECOUTY, Bertrand, Jean, Gaston**
**8, rue du Clos des Vignes**
**F-35690 Acigne (FR)**
Inventeur : **PRUNAULT, Yves, Hervé**
**9, rue du Point du Jour**
**F-35150 Corps-Nuds (FR)**

(74) Mandataire : **Plaçais, Jean-Yves et al**
**Cabinet Netter 40, rue Vignon**
**F-75009 Paris (FR)**

**Description**

La présente invention concerne le traitement des données ou informations, et plus particulièrement leur stockage, lorsque celui-ci doit être effectué avec une haute sécurité.

En de nombreuses applications, notamment celles liées à l'informatique répartie, il est souhaitable de disposer de mémoires stables.

Une mémoire stable est un dispositif de stockage de données qui possède les propriétés suivantes : en premier lieu, le stockage physique de l'information est stable, c'est-à-dire que l'information ne tend pas à disparaître lorsque le temps passe ; en second lieu, l'opération d'écriture peut être rendue « atomique », c'est-à-dire que l'on peut être sûr qu'une information présentée pour l'écriture est soit écrite correctement, soit pas écrite du tout.

Des mécanismes de protection de mémoires dans les systèmes d'exploitation multi-utilisateurs sont décrits dans le document de D. J. KUCK « The structure of computers and computations » pp. 393-399, John Wiley & Sons, New York (US), 1978 et dans le document de SCHROEDER et autres « A Hardware Architecture for Implementing Protection Rings », Communications of the ACM, Vol. 15, n° 3, March 1972, pp. 157-170. Ainsi que le montre ces textes, il s'agit d'éviter à l'aide de ces mécanismes les méfaits d'usagers malveillants, mais rien n'est prévu contre les fautes du système proprement dit.

Le document de CHAMOFF et THORSON : « Nonvolatile totals implementation », IBM Technical Disclosure Bulletin, vol. 20, n° 10, March 1978 pp. 4071-4072, prévoit le cas d'une défaillance du système proprement dit. Cependant il se limite à un cas d'incident sur la tension d'alimentation de mémoire vive sauvegardée, et le problème visé est d'éviter alors une perte d'information. Par contre rien n'est prévu pour assurer qu'une opération d'écriture a été faite de manière valide et complète, c'est-à-dire qu'elle est « atomique » au sens de la présente invention.

Les mêmes commentaires s'appliquent à la Demande de Brevet européen n° 0 067 227.

Actuellement, les mémoires stables sont construites à partir de disques. Bien que les disques ne fournissent pas directement un stockage stable des données, ils permettent d'obtenir un tel stockage stable, en particulier par usage conjoint de deux unités de disques. Cette façon de faire présente cependant des inconvénients. Le premier inconvénient est que le temps d'accès à une mémoire à disques n'est pas suffisamment court pour qu'une unité de stockage stable fondée sur des disques puisse être considérée comme une mémoire rapide. L'autre inconvénient est que l'obtention du caractère stable de la mémoire passe par la copie de la même information dans deux unités à disques. L'exécution de cette double copie par le processeur de commande utilise la mémoire vive de ce dernier. Il en résulte qu'une erreur intervenant dans ce processeur entre l'écriture dans l'un des disques et l'écriture dans l'autre disque compromettra le caractère stable du stockage des informations.

La présente invention vient résoudre ces inconvénients, en fournissant d'une part un dispositif de mémoire (ou stockage de données) qui soit d'accès rapide et puisse offrir un stockage stable, d'autre part en évitant au maximum l'intervention de la mémoire vive du processeur pour la recopie d'informations dans deux sections de mémoire différentes.

La présente invention a donc pour objet un dispositif de stockage de données, du type comprenant :

des bancs de mémoire, adressables de l'extérieur, pourvus de commandes sélectives d'écriture et de lecture, et susceptibles de faire partie de l'espace d'adressage d'un processeur et

des moyens d'autorisation d'accès, associés à ces bancs de mémoire, et propres è désigner une zone de mémoire constituée d'une partie au moins de l'un des bancs, sélectivement pour une opération d'écriture ou de lecture, caractérisé en ce que lesdits bancs sont entièrement constitués de mémoire vive non volatile, en ce que ladite autorisation d'accès ne vaut que pour une seule opération comportant écriture et/ou lecture, l'autorisation étant exclusive et détruite après l'adressage de la zone de mémoire concernée, en ce que les moyens d'autorisation d'accès désignent à chaque fois deux bancs de mémoire ou zones de bancs de mémoire couplés, et en ce que, pour une écriture complète et valide, les moyens d'autorisation d'accès passent dans l'ordre et sans répétition, au moins par les deux états suivants :

a) écriture dans la première zone ; seconde zone inaccessible, pour inscrire des données issues du processeur dans la première zone,

b) lecture de la première zone, écriture dans la seconde zone, pour recopier les données de la première zone dans la seconde.

La présente invention a également pour objet un procédé de transfert de données entre un processeur et un dispositif de stockage de données, dans lequel le processeur qui inclut le dispositif de stockage de données dans son espace d'adressage, ne peut accéder à celui-ci que par l'intermédiaire de moyens d'autorisation d'accès associés aux bancs de mémoire du dispositif de stockage des données, et propres à désigner une zone de mémoire constituée d'une partie au moins de l'un des bancs, sélectivement pour une opération d'écriture et/ou de lecture, caractérisé en ce que le dispositif de stockage est entièrement constitué de mémoire vive non volatile, en ce que ladite autorisation ne vaut que pour une seule opération constituée par le transfert indivisible d'un groupe d'informations élémentaires, l'autorisation étant exclusive et détruite après l'adressage de la zone de mémoire concernée, en ce que les moyens d'autorisation d'accès désignent à chaque fois deux bancs de mémoire ou zones de bancs de mémoire couplés, et en ce que, pour une écriture complète et valide, les moyens d'autorisation d'accès passent dans l'ordre et sans répétition, au moins par les deux états suivants :

a) écriture dans la première zone ; seconde zone inaccessible, pour inscrire des données issues du processeur dans la première zone,

b) lecture de la première zone, écriture dans la seconde zone, pour recopier les données de la première zone dans la seconde.

D'autres caractéristiques et avantages de l'invention apparaîtront à l'examen de la description détaillée ci-après, et des dessins annexés, sur lesquels :

la figure 1 illustre schématiquement un processeur associé à une mémoire stable rapide et à une unité à disques ;

la figure 2 illustre schématiquement la structure générale de la mémoire stable rapide ;

la figure 3 illustre un système de transactions en informatique répartie utilisant des mémoires stables ;

les figures 4 et 5 illustrent de façon plus détaillée un exemple de réalisation d'une mémoire rapide stable ; et

les figures 6 et 7 sont deux organigrammes applicables notamment au système de transaction de la figure 3.

Il sera fait référence dans la suite à différents documents, notés comme suit :

(BANA-82) — BANATRE M., LAPALME G. ENCHERE : A Distributed Auction Bidding System. 3rd Int. Conf. Distributed Computing System, (Miami October 82), pp. 833, 837.

(GRAY-78) — GRAY J. N. Notes on Database Operating Systems. LCNS 60, Springer-Verlag, (1978), pp. 393-481.

(GIFF-82) — GIFFORD D. K. Information Storage in a Decentralized Computer System. CSL-81-8, Xeros Palo Alto Research Center, March 1982.

(LAMP-76) — LAMPSON B. W., STURGIS H. Crash Recovery in a Distributed Data Storage System. Working Paper, Xerox PARC, November 1976.

La présente invention s'applique notamment dans un système de transactions commerciales décentralisé, à l'aide de moyens informatiques distribués. Certains aspects nécessaires à un tel système ont déjà été décrits (BANA-82).

En bref, il s'agit de permettre à des membres d'une organisation comprenant des vendeurs et des acheteurs, d'effectuer des échanges commerciaux, par exemple à la manière de la « vente au cadran ». En Logique, l'entité de modélisation d'un échange commercial est la transaction.

D'une manière générale, les transactions sont supposées posséder trois propriétés essentielles (GRAY-78) :

i) la consistance ou cohérence : les transactions doivent obéir à des protocoles légaux ;

ii) l'atomicité : une transaction se produit, ou ne se produit pas ;

iii) la durabilité : une fois qu'une transaction a été validée, elle ne peut plus être annulée.

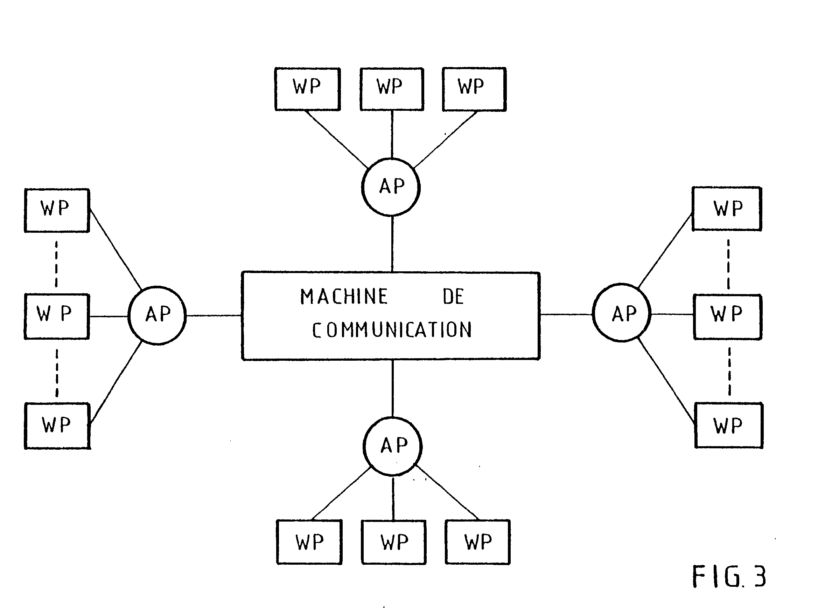

La structure de base du système de transactions est illustrée sur la figure 3. Elle comprend une série de processeurs d'application AP, qui ont la charge de traiter les transactions. Les usagers, acheteurs et vendeurs, peuvent communiquer avec le système défini par ces processeurs d'application, par l'intermédiaire de stations de travail WP, lesquelles ont pour but de permettre aux acheteurs et aux vendeurs de participer à des transactions. Tous les processeurs d'application AP sont connectés à travers des moyens d'intercommunication, ou machine de communication MC. Cela permet à des usagers de rejoindre ou de quitter le système, ainsi que de lui communiquer des informations.

La réalisation physique de la machine de communication MC peut prendre différentes formes, telles qu'un réseau local ou plusieurs réseaux locaux interconnectés par l'intermédiaire d'un réseau national (TRANSPAC ou autres).

Le système, nommé ci-après ENCHERE, est constitué de deux niveaux, à savoir le niveau machine et le niveau d'application.

Le niveau machine comprend des sites $S_i$, articulés chacun autour d'un processeur d'application AP, des stations de travail WP, et la machine de communication MC.

Si l'on considère une station de travail particulière, telle que $WP_i$, appartenant à un site $S_i$, c'est-à-dire connectée au processeur d'application $AP_i$, la station de travail WP, émet des ordres au site $S_i$, lequel les interprète. Parmi ces ordres, une « vente nouvelle » fait démarrer une nouvelle transaction. Pour l'exécution de cette nouvelle transaction, plusieurs processus sont créés, l'un sur le site vendeur, et les autres sur les sites acheteur. L'un d'eux, le processus de coordination, représente le vendeur ; les autres, les processus esclaves, représentent les acheteurs qui vont participer à la vente. Un tel groupe de processus coopérant dans le but d'effectuer une tâche commune, qui est ici la vente d'un produit, est appelé une « activité ». Bien sûr, plusieurs activités peuvent se dérouler au même moment.

Un tel système constitue un exemple du cas ou peuvent se présenter deux types d'anomalies :

des anomalies dues par exemple au logiciel, qui peuvent conduire à des actions indésirables ayant pour résultat notamment des accès en mémoire non contrôlés ;

divers types d'anomalies de matériel, dont la plus simple est la perte d'alimentation électrique, et qui peuvent aussi avoir pour résultat des accès en mémoire incontrôlés.

L'invention vient résoudre les problèmes exposés plus haut, à l'aide d'une mémoire stable particulière, et de moyens complémentaires éventuels.

Une mémoire stable (LAMP-76) est un support d'information qui possède deux caractéristiques essentielles :

i) un support physique non volatile.

ii) des opérations de lecture et d'écriture atomiques.

Généralement le support physique utilisé pour réaliser une mémoire stable est un disque. Bien qu'il ne possède pas la caractéristique (ii), il est possible de le programmer à cet effet.

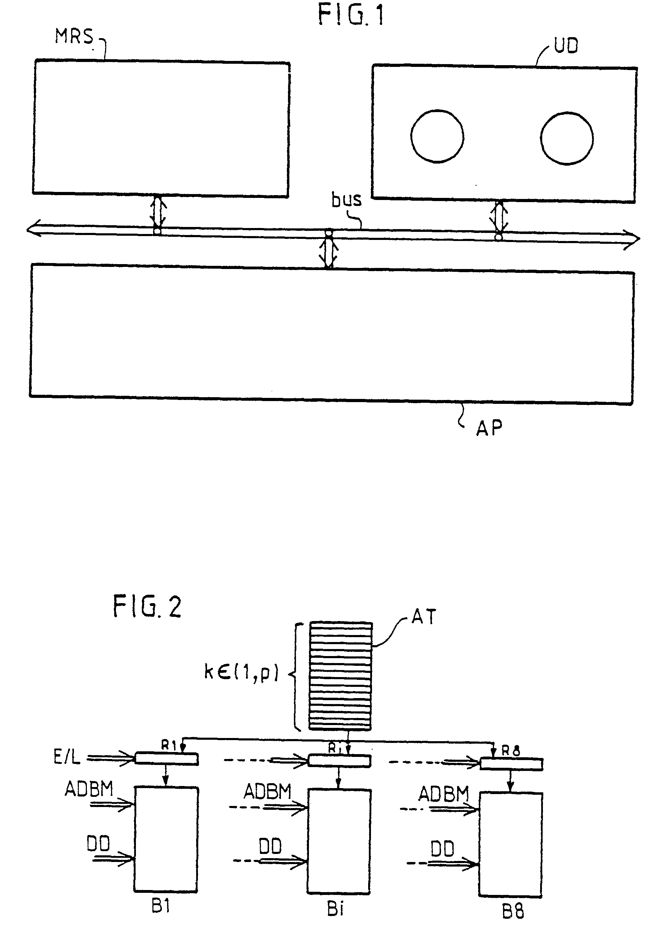

Dans le système ENCHERE, chaque processeur d'application AP (Figure 1) est équipé d'une mémoire stable qui contient :

les variables stables de processus d'activité, qui sont modifiées par l'exécution d'activités atomiques imbriquées et détruites à la terminaison du processus créateur, par exemple la variable représentant EA (V) chez un processus site vendeur EA (V) désigne l'ensemble des acheteurs associés à un vendeur donné pour une transaction donnée ;

des objets (de type fichier) qui ont une durée de vie supérieure aux processus d'activités atomiques qui y accèdent et les modifient. Le catalogue des lots à vendre constitue un exemple de tels objets.

Etant observé qu'il est irréaliste de ranger des variables stables sur un disque, principalement à cause de temps d'accès, la mémoire stable comporte deux niveaux :

une mémoire à accès rapide stable (MRS) réalisée à partir d'une mémoire vive non volatile, pour ranger les variables stables,

une unité de disque (UD) qui contient les objets.

La mémoire stable rapide est le premier apport essentiel de l'invention.

La mémoire stable rapide MRS (Figure 1) fait partie de l'espace d'adressage du processeur d'application AP.

Le contenu des variables stables d'un processus dont le processeur AP a la charge est vulnérable aux comportements imprévisibles du processeur résultant d'une panne matérielle (coupure de courant,...) ou d'une faute logicielle (violation de la protection mémoire,...). Pour y faire face, l'invention propose une mémoire MRS dotée de mécanismes de protection matériel et logiciel décrits ci-après. De préférence, le processeur AP utilise aussi une unité de mémoire à disques UD, comme indiqué plus haut.

La mémoire rapide stable MRS est composée de 8 bancs mémoires. L'accès en lecture ou écriture à chacun des bancs est protégé par une clé. Ceci est illustré sur la figure 2.

Sur cette figure :

Bi, $i \in [1,8]$ représente un banc mémoire, la taille de ce banc est fixée à 8K octets, par exemple.

Ri, $i \in [1,8]$ est un registre « 2-bits » associé au banc Bi, il contient les droits d'accès courants du banc. (00 : pas d'accès, 01 : accès en lecture seule, 10 : accès en écriture seule, 11 : accès en lecture et écriture).

AT est une table d'accès de $p = 32$ octets. Le bit j de l'octet k de cette table est positionné à 1 si le banc j de la mémoire est adressable. k constitue « la clé matérielle » d'accès au banc j.

Les accès élémentaires à la mémoire rapide stable MRS sont décrits ci-après :

Un processus P du processeur AP qui désire utiliser un banc mémoire doit d'abord l'acquérir en exécutant la primitive Allouer. L'effet de cette primitive est, dans le processeur AP :

d'allouer un banc libre Bi, $i \in [1,8]$,

de rechercher une entrée libre k dans la table AT, et positionner le bit i de AT [k] à 1,

de délivrer à P le couple (adr, k), adr étant l'adresse physique du banc et k la clé d'accès à ce banc.

P ne peut copier le contenu d'un registre reg à l'adresse y en MRS qu'en exécutant le couple d'instructions suivant : ouvrir (k, E) ; écrire (reg, x), ou x représente l'adresse y suivie du mot à recopier.

L'exécution de l'opération ouvrir a pour effet de charger le registre Ri associé au banc Bi (repéré par AT [k]) avec le droit d'accès « écrire ».

L'exécution de écrire (reg, x) ne copie le contenu de reg à l'adresse y dans la mémoire rapide stable MRS que si y est l'adresse d'un octet de Bi ; dans le cas contraire l'opération est rejetée. Après l'exécution de l'opération, le banc Bi n'est plus accessible le contenu de Ri est « pas d'accès ».

Le traitement de la lecture est analogue à celui de l'écriture, à partir du couple d'instructions : ouvrir (k, L) ; lire (req, x).

Les opérations de lecture ou d'écriture d'une zone en mémoire rapide stable seront maintenant décrites.

Les opérations de lecture et d'écriture d'une zone en mémoire rapide stable MRS sont réalisées à partir des accès élémentaires lire ou écrire, chacun d'eux étant précédé d'une opération ouvrir.

Dans la suite, il est admis qu'un banc est ouvert en écriture (respectivement lecture) si une opération d'écriture (respectivement de lecture) d'une zone est en cours.

Les mécanismes matériels de protection d'accès décrits plus haut assurent d'une part qu'aucun accès direct à un banc mémoire ne peut être effectué et d'autre part que tout accès est fortement contrôlé par l'utilisation de clés d'accès.

Ces mécanismes, satisfaisants lorsqu'un banc n'est accédé que par un processus, ne le sont plus si plusieurs processus se le partagent. Ils sont alors complétés pour éviter qu'un processus, lors d'un accès au banc, n'endommage une zone d'un autre processus sur le même banc.

Le mécanisme de protection associé au partage de banc est maintenant décrit. Deux processus P1 et P2 se partagent un même banc de la mémoire rapide stable (ci-après notée MRS).

L'invention offre un mécanisme logiciel qui détecte les accès interdits de P1 à la zone des données de P2 et réciproquement. La solution proposée utilise l'encryptage [GIFF-82].

Le système du processeur AP délivre, a chaque processus qui réserve une zone en mémoire MRS un doublet comprenant une clé d'encryptage et l'adresse de la zone encryptée avec cette clé.

Tout accès ultérieur à cette zone ne peut être fait que par un processus qui possède ce doublet. Toute tentative de décryptage, qui conduit à un échec, provoque une faute détectée par le système.

Tous les accès définis jusqu'ici ne concernent que l'écriture ou la lecture d'une zone d'un banc de la MRS. On décrira maintenant les opérations d'écriture et de lecture atomiques sur la mémoire rapide stable PRS.

Le système alloue à chaque processus P implanté sur le processeur d'application un couple de zones (Zi, Zj) appartenant à deux bancs distincts Bi et Bj, de sorte qu'une variable stable de P ait à tout moment deux copies sur deux bancs indépendants.

A — Ecriture atomique d'une variable, stable V de P en MRS.

Soient Vi et Vj les adresses de recopie de V sur les bancs Bi et Bj, l'écriture est décrite par l'algorithme suivant :

1-Bi ouvert en écriture — Bj sans accès 2-écriture de V sur Vi

3-Bi ouvert en lecture — Bj ouvert en écriture 4- écriture de V lu à l'adresse $V_i$ sur $V_j$

5-Bi sans accès — Bj sans accès.

Cet algorithme assure qu'à l'issue de l'étape 5 les deux copies Vi et Vj de V en MRS sont identiques. Ceci ne serait pas le cas si l'on effectuait l'écriture de V sur Vi puis l'écriture de V sur Vj, la copie de V en mémoire risquant d'être modifiée suite à une anomalie entre les deux écritures (étapes 2 et 4).

Admettant qu'une anomalie survienne à la phase 2, dans ce cas V n'est pas copié sur Vi. Le mécanisme de récupération mis en œuvre par le système assure que le banc Bj sera recopié sur le banc Bi à la reprise. L'écriture atomique de V en MRS n'est pas faite.

Admettant qu'une anomalie survienne en phase 4, la copie de Vi sur Vj n'est pas effectuée. A la reprise Bi est recopiée sur Bj, l'écriture de Vi sur Vj est donc réalisée. L'écriture atomique de V en MRS est faite.

Une remarque est à faire :

Le bon fonctionnement de l'algorithme précédent suppose que le passage de l'état (Bi ouvert en écriture — Bj sans accès) dans l'état (Bi ouvert en lecture — Bj ouvert en écriture) est indivisible. Dans le cas contraire, à la reprise après une anomalie, le banc Bj (resp. Bi) ouvert en écriture est considéré inconsistant, il ne peut être utilisé pour ré-initialiser Bi (resp. Bj).

B — Lecture atomique d'une variable V en MRS.

La lecture est décrite par l'algorithme suivant :

1-Bi ouvert en lecture — Bj ouvert en lecture 2-si co les contenus de Vi et Vj sont égaux co (les symboles co encadrent un commentaire recouvrant une série d'opérations de test aisément réalisables).

Alors :

co Vi est copié dans V (en mémoire vive) co sinon

co erreur fatale, la modification anormale de Vi ou de Vj n'a pas été détectée co

fsi (fin du « si »).

3-Bi sans accès — Bj sans accès.

Si une anomalie survient pendant le déroulement de la phase 2 l'opération est recommencée à la phase 1.

On s'intéressera maintenant à la gestion de l'unité de disque (UD), qui accompagne de préférence la mémoire stable MRS (figure 1).

Les seuls objets transférés de l'espace adressable du processeur AP vers l'UD appartiennent à la MRS. Les algorithmes utilisés pour effectuer la lecture ou l'écriture d'un objet sur l'UD sont similaires à ceux décrits dans [LAMP-76].

Le fait que seuls les objets situés en MRS puissent être écrits sur l'UD assure que les deux copies OD1 et OD2 d'un objet O sur l'UD sont identiques (si l'écriture s'est déroulée correctement). En effet l'objet O en MRS est protégé contre des accès incontrôlés. Ceci n'est pas le cas dans [LAMP-76] ou l'objet copié sur disque est en mémoire vive, il est donc susceptible d'être modifié entre les deux écritures sur disque.

En conclusion, il s'avère que la mémoire rapide stable proposée présente des avantages décisifs, dont :

performance : le temps d'accès aux informations rangées en MRS est très rapide, il n'est que deux fois supérieur au temps d'accès d'informations de même taille rangées en mémoire vive. Il est beaucoup plus faible que celui généralement obtenu pour les mémoires stables construites à partir d'un disque. A titre de comparaison, le temps d'écriture de 256 octets avec un processeur I 8086 sur la MRS est de 0,5 ms, contre 9 ms pour le système à disques DFS avec des processeurs Altos.

Sûreté : la MRS est protégée contre toute tentative d'accès erronés pendant sa mise à jour.

Atomicité, tant à l'écriture qu'à la lecture, à l'aide des moyens exposés plus haut.

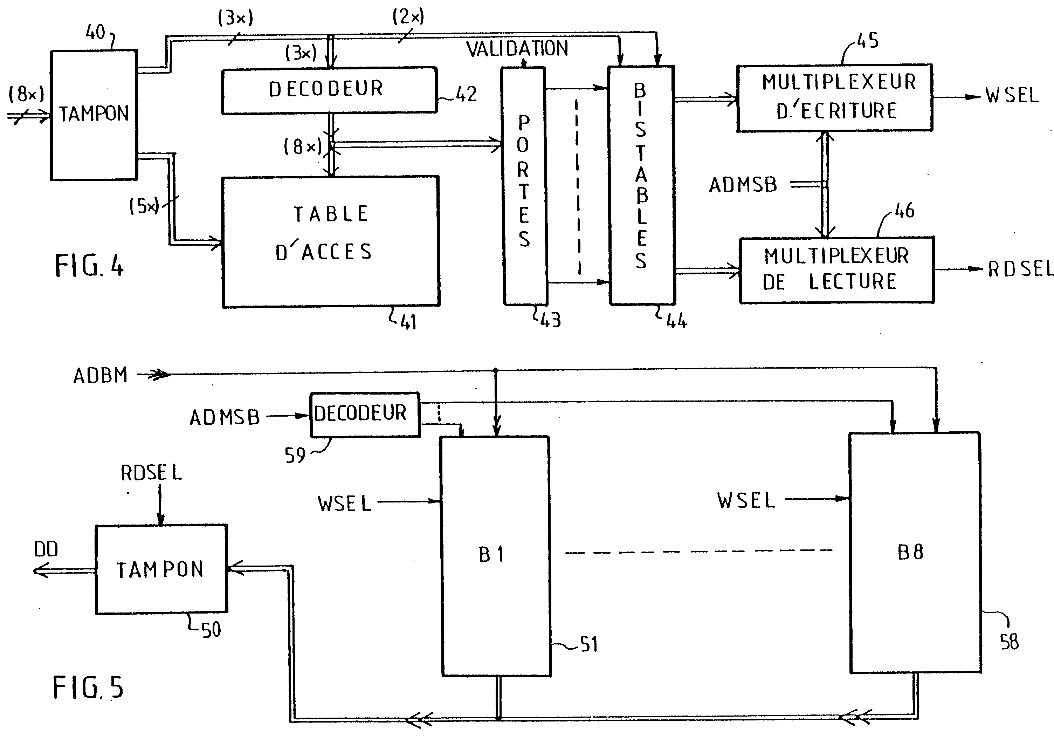

On décrira maintenant en référence aux figures 4 et 5 un mode de réalisation particulier de la mémoire stable rapide.

Les entrées constituant l'instruction primitive, « allouer » ou « ouvrir », suivant le cas, sont appliquées sous forme de huit fils à un tampon d'entrée 40. Cinq fils de sortie du tampon d'entrée 40 vont servir d'adresse à la table d'accès 41.

Les trois autres fils de sortie du tampon 40 sont appliqués tout d'abord à un décodeur 42. Le décodeur 42, de 3 en 8, comporte donc huit sorties qui vont servir d'entrées de données à la table d'accès 41. Ainsi, l'instruction d'allouer permet en même temps de définir l'index k par les adresses de la table d'accès 41, et le chargement d'une clé à travers le décodeur 42. Dans la clé, est seul positionné à 1 le bit dont le rang i correspond au banc libre B affecté au processus concerné.

Les huit entrées-sorties de la table d'accès 41 sont également appliquées à des portes respectives 43, qui, avec n paires de bascules bistables 44, forment les registres R précités.

Pour l'instruction « ouvrir », la clé K est communiquée en tant qu'adresse à la table d'accès 41 comme précédemment. Au lieu d'être appliqués au décodeur 42, deux des trois autres fils issus du tampon 40 vont vers les bistables 44, à raison d'un fil pour chacun des deux bistables d'une même paire. En réponse à l'information d'adresse qui lui est appliquée, la table d'accès délivre un bit à 1 sur une seule de ses huit sorties. Les portes 43 n'habilitent ou ne valident alors que l'une des paires de bistables 44, qui seule pourra recevoir l'ordre d'écriture ou de lecture transmis par les deux lignes allant du tampon 40 aux bistables 44. L'instruction primitive d'ouverture est ainsi enregistrée dans les bistables 44.

Les sorties des bistables 44 sont regroupées, l'un des groupes concernant les bistables d'écriture, et les autres de lecture. Le groupe des lignes relatives aux bistables d'écriture est appliqué à un multiplexeur d'écriture 45. Le groupe des lignes sortant des bistables de lecture est appliqué à un multiplexeur de lecture 46. Les deux multiplexeurs reçoivent les bits les plus significatifs de l'adresse des bancs de mémoire (ceux qui sont représentatifs des numéros de bancs), ces bits les plus significatifs étant véhiculés par des lignes notées ADMSB. Enfin, les multiplexeurs d'écriture 45 et de lecture 46 fournissent respectivement des autorisations d'écriture notée WSEL et de lecture notée RDSEL.

Sur la figure 5, un tampon noté 50 reçoit le signal de lecture RDSEL. Les bancs de mémoire B1 à B8 sont désignés par les références numériques 51 à 58. Des lignes d'adresses communes à tous les bancs notées ADBM sont appliquées aux bancs de mémoire 51 à 58. Le signal ADMSB déjà cité est appliqué à un décodeur 59, lequel n'active que l'un des bancs B1 à B8. Chacun de ces bancs reçoit par ailleurs l'ordre d'écriture WSEL (s'il existe). Enfin, les sorties de données des bancs 51 à 58 sont réunies dans une ligne commune qui va vers le tampon 50. Sous le contrôle du signal d'autorisation de lecture RDSEL, le tampon 50 peut délivrer ces données en tant que signal de sortie de données DD.

On comprend maintenant qu'un ordre d'écriture ou de lecture relatif à l'un des bancs de mémoire ne sera exécuté que si l'adresse contenue dans cet ordre correspond à ce qui a été défini par l'ordre d'ouverture précédent, tel qu'il a été mémorisé dans les bistables 44, et appliqué aux différents bancs de mémoire à travers les multiplexeurs 45 et 46.

On décrira maintenant un exemple avantageux de protocole de validation, qui met en lumière l'utilité de mémoires stables. Il est rappelé qu'une même activité fait intervenir un processus coordinateur, du côté du vendeur, et des processus esclaves, du côté des acheteurs.

D'une manière générale, les esclaves envoient sur message « prêt à valider » au coordinateur. Lorsque tous les esclaves ont envoyé ce message, le coordinateur peut prendre la décision de validation.

Si un esclave (ou plusieurs) demande que l'activité avorte, alors le coordinateur procède à un tel avortement.

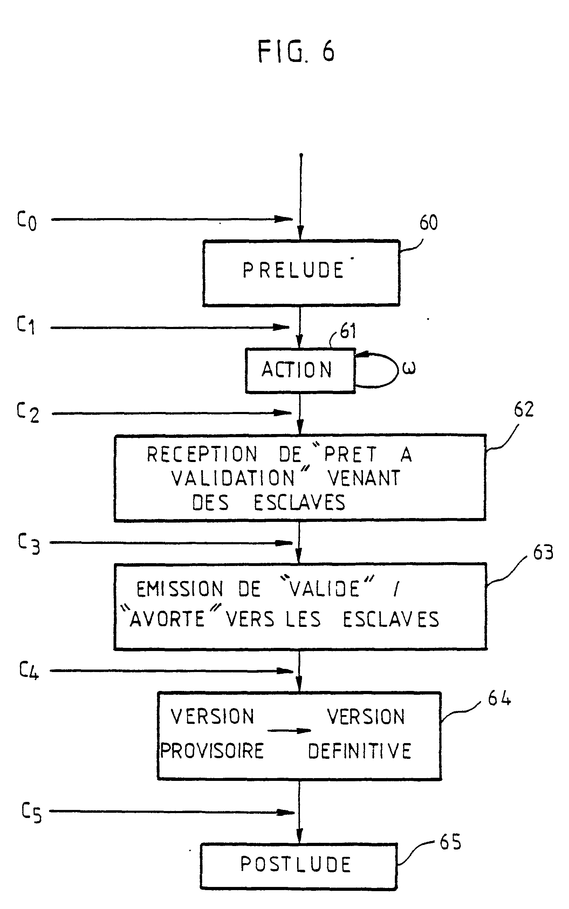

Le graphe d'exécution d'un processus coordinateur est illustré sur la figure 6.

La prélude, à l'étape 60, se préoccupe de l'allocation de ressources, notamment l'allocation de canaux. L'étape « action » 61 effectue l'analyse d'ordres émanant d'autres processus. En fonction de ces ordres, sont exécutées des séquences spécifiques d'instructions. Ensuite, à l'étape 62, le coordinateur reçoit des messages « prêt à valider » des esclaves. Lorsqu'il a reçu tous ces messages « prêt à valider », il peut décider (étape 63) de permettre aux esclaves de valider (en envoyant le message « Valide », et ensuite de valider ses propres objets. Si au moins un esclave a eu des difficultés (il n'a pu envoyer le message « prêt à valider »), le coordinateur émet alors un message « avorte » vers tous les esclaves, et efface sa propre version provisoire (étape 64). Dans le cas contraire, la version provisoire devient définitive à l'étape 64. La libération des ressources allouées est effectuée dans l'étape de postlude 65.

Les flèches $C_i$ désignent des points de contrôle, où l'état du processus est sauvegardé. Si une anomalie intervient entre $C_i$ et $C_{i-1}$, le processus redémarrera au point $C_i$. Une fois démarrée, l'exécution du postlude doit aller jusqu'à sa fin même s'il faut plusieurs tentatives (le postlude est idempotent).

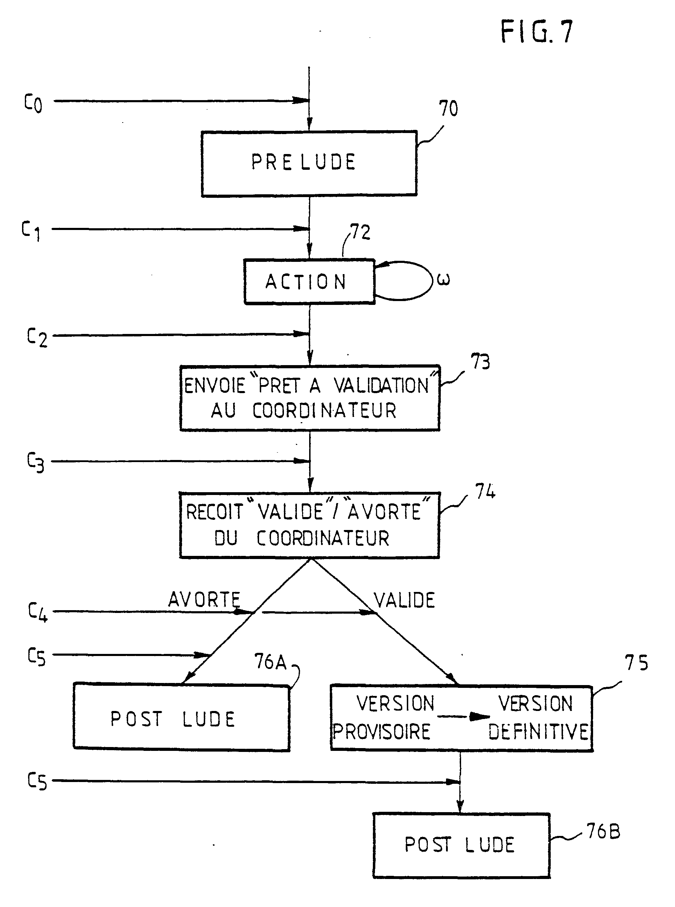

Le graphe d'un processus esclave apparaît sur la figure 7. Ses étapes 70 à 76A ou 76B se comprennent d'après le graphe du coordinateur. On note l'aiguillage suivant qu'il y a validation ou avortement et l'existence des mêmes points de sauvegarde $C_i$ (i allant de 0 à 5).

Le comportement en cas d'anomalie est intéressant.

Quant au coordinateur, son rôle est de détecter le mauvais fonctionnement des esclaves (en usant d'un recul approprié)

valider ou avorter des activités.

Une anomalie peut arriver avant ou après la validation.

En présence d'une anomalie avant validation, le système part des représentations des processus sauvegardés en mémoire stable, et effectue les actions suivantes :

re-exécution du prélude du coordinateur, ce qui réalloue les ressources requises (canaux, etc.) nécessaire pour les interactions entre processus ;

ré-initialisation des variables locales à partir des informations sauvegardées en mémoire stable redémarrage du coordinateur depuis le point $C_i$, qui est le dernier point de contrôle exécuté par le coordinateur avant l'anomalie.

Le coordinateur peut présenter une anomalie après la décision de validation. Si l'anomalie intervient pendant que le coordinateur effectuait une « émission de validé » vers tous ses esclaves, le système effectue les actions suivantes :

exécution du prélude du coordinateur, redémarrage à partir du point de contrôle $C_5$.

Du côté des esclaves, si une anomalie intervient avant validation, la réaction de chaque esclave est semblable à celle du coordinateur décrite plus haut.

Si une anomalie intervient après que le message de prévalidation ait été envoyé, alors, après exécution de son prélude, l'esclave concerné attend la validation du coordinateur.

A noter que les esclaves peuvent soit directement recevoir des messages « avorté » du coordinateur, soit commettre un « suicide ».

Cette description rapide, du système ENCHERE montre bien l'intérêt des mémoires stables, et leur rôle dans les protocoles impliqués pour la validation d'activités.

**Revendications**

1. Dispositif de stockage de données, du type comprenant :
   - des bancs de mémoire (Bi), adressables de l'extérieur, pourvus de commandes sélectives d'écriture et de lecture, et susceptibles de faire partie de l'espace d'adressage d'un processeur (AP) et
   - des moyens d'autorisation d'accès (AT, Ri), associés à ces bancs de mémoire, et propres à désigner une zone de mémoire constituée d'une partie au moins de l'un des bancs (Bi), sélectivement pour une opération d'écriture ou de lecture, caractérisé en ce que lesdits bancs (Bi) sont entièrement constitués de mémoire vive non volatile, en ce que ladite autorisation d'accès (AT, Ri) ne vaut que pour une seule opération comportant écriture et/ou lecture (Ri à « 00 », « 01 », « 10 » ou « 11 »), l'autorisation étant exclusive et détruite après l'adressage de la zone de mémoire concernée, en ce que les moyens d'autorisation d'accès désignent à chaque fois deux bancs de mémoire (Bi) ou zones de bancs de mémoire couplés, et en ce que, pour une écriture complète et valide, les moyens d'autorisation d'accès passent dans l'ordre et sans répétition, au moins par les deux états suivants :
   a) écriture dans la première zone ; seconde zone inaccessible, pour inscrire des données issues du processeur dans la première zone,
   b) lecture de la première zone, écriture dans la seconde zone, pour recopier les données de la première zone dans la seconde.

2. Dispositif selon la revendication 1, caractérisé en ce que les moyens d'autorisation d'accès possèdent aussi un état de lecture dans les deux zones et en ce qu'une écriture comprend aussi la vérification, par lecture des deux zones (Bi), de ce que leurs contenus coïncident.

3. Dispositif selon l'une des revendications 1 et 2, caractérisé en ce qu'une lecture complète et valide est obtenue seulement si les contenus des deux bancs de mémoire (Bi) ou zone de bancs de mémoire couplés sont identiques.

4. Dispositif selon l'une des revendications 1 à 3, caractérisé en ce que les moyens d'autorisation d'accès (AT, Ri ; 40-45) sont agencés pour décomposer une opération en des phases élémentaires de lecture et d'écriture d'un groupe d'informations élémentaires dans les zones de mémoire, phases dont chacune ne peut être interrompue.

5. Dispositif selon l'une des revendications 1 à 4, caractérisé en ce que les moyens d'autorisation d'accès comportent des moyens de verrouillage (AT, Ri ; 41-44).

6. Dispositif selon l'une des revendications 1 à 5, caractérisé en ce que les moyens d'autorisation d'accès comprennent, pour chaque banc de mémoire, des organes de mémoire auxiliaire (Ri ; 44), agencés pour contrôler sélectivement l'accès à tout ou partie du banc de mémoire associé.

7. Dispositif selon l'une des revendications 1 à 6, caractérisé en ce que les moyens d'autorisation d'accès comprennent :
   - des moyens d'accès à clé (40-43) propres à définir des clés désignant chacune une zone de l'un des bancs de mémoire, et à répondre ensuite à l'introduction de l'une des clés, accompagnée d'une demande d'écriture ou de lecture, par une autorisation d'écriture ou de lecture sélectivement applicable à la seule zone et au seul banc de mémoire définis par ladite clé, cette autorisation étant détruite après tout adressage de cette zone de mémoire ou par l'introduction d'une nouvelle clé.

8. Dispositif selon la revendication 7, caractérisé en ce que les moyens d'accès à clé comprennent :
   - un générateur de clé (AT ; 41), et
   - des registres de droit d'accès (Ri ; 44) pouvant être habilités sélectivement par l'une des clés, chaque registre possédant trois états au moins, dont un état de repos ou absence de droit d'accès, ainsi que deux états respectifs de droit d'accès en écriture et en lecture, états qui ne peuvent être pris que lorsque le registre est habilité, et
   - chaque zone de mémoire étant commandée, pour son accès, par l'un respectif des registres, de façon à ne répondre à l'adressage extérieur que si un droit d'accès en écriture ou lecture a été noté dans le registre qui lui est associé pour sa commande.

9. Procédé de transfert de données entre un processeur (AP) et un dispositif de stockage de données (MRS), dans lequel le processeur (AP) qui inclut le dispositif de stockage de données (MRS) dans son espace d'adressage, ne peut accéder à celui-ci que par l'intermédiaire de moyens d'autorisation d'accès (AT, Ri) associés aux bancs de mémoire (Bi) du dispositif de stockage des données, et propres à designer une zone de mémoire constituée d'une partie au moins de l'un des bancs, sélectivement pour une opération d'écriture et/ou de lecture, caractérisé en ce que le dispositif de stockage est entièrement constitué de mémoire vive non volatile, en ce que ladite autorisation ne vaut que pour une seule opération constituée par le transfert indivisible d'un groupe d'informations élémentaires, l'autorisation étant exclusive et détruite après l'adressage de la zone de mémoire concernée, en ce que les moyens d'autorisation d'accès désignent à chaque fois deux bancs de mémoire (Bi) ou zones de bancs de mémoire couplés, et en ce que, pour une écriture complète et valide, les moyens d'autorisation d'accès passent dans l'ordre et sans répétition, au moins par les deux états suivants :

a) écriture dans la première zone ; seconde zone inaccessible, pour inscrire des données issues du processeur dans la première zone,

b) lecture de la première zone, écriture dans la seconde zone, pour recopier les données de la première zone dans la seconde.

10. Procédé selon la revendication 9, caractérisé en ce que les moyens d'autorisation d'accès possèdent aussi un état de lecture dans les deux zones et en ce qu'une écriture comprend aussi la vérification, par lecture des deux zones (Bi), de ce que leurs contenus coïncident.

11. Procédé selon l'une des revendications 9 et 10, caractérisé en ce qu'une lecture complète et valide est obtenue seulement si les contenus des deux bancs de mémoire (Bi) ou zone de bancs de mémoire couplés sont identiques.

12. Procédé selon l'une des revendications 9 à 11, caractérisé en ce que lors d'une anomalie dans l'écriture de la première zone, on arrête, et à la reprise on recopie la seconde zone dans la première, l'opération d'écriture n'étant pas faite, tandis que lors d'une anomalie à la recopie de la première zone dans la seconde, on arrête, et à la reprise, on recopie à nouveau la première zone dans la seconde, l'opération d'écriture étant faite, ce qui réalise une écriture atomique.

13. Procédé selon l'une des revendications 9 à 12, dans lequel le processeur est susceptible d'exécuter plusieurs processus indépendants, caractérisé en ce qu'à chaque processus est associé en même temps un couple de zones appartenant à deux bancs de mémoire distincts.

14. Procédé selon la revendication 13, caractérisé par les opérations suivantes du processeur :

a) à chaque demande de mémoire nouvelle d'un processus, allouer à celui-ci une zone de mémoire libre, et engendrer une clé associée à cette zone, tout en ne communiquant audit processus que cette clé et l'adresse physique de ladite zone de mémoire, et

b) n'exécuter d'opération d'écriture ou de lecture pour ledit processus que précédée d'une instruction d'ouverture d'accès comportant la clé affectée à la zone et la nature ; écriture ou lecture, de l'opération, ce qui à pour effet d'autoriser l'accès physique à la seule zone désignée, pour l'écriture ou la lecture, respectivement.

15. Procédé selon l'une des revendications 9 à 14, dans lequel le processeur est en outre associé à une unité de mémoire à disque du type stable (UD), caractérisé en ce que seules les données extraites du dispositif de stockage de données rapides (MRS) sont transférées dans l'unité de mémoire à disque (UD).

16. Application du dispositif et/ou du procédé selon l'une des revendications précédentes à un système informatique réparti comprenant une pluralité de processeurs (AP) reliés par un milieu d'intercommunication commun, et propres à exécuter chacun un ou plusieurs processus indépendants, caractérisée en ce que chacun desdits processeurs (AP) est associé à une mémoire stable (MRS) selon l'une des revendications précédentes pour sauvegarder des variables utilisées par le ou les processus exécutés sur ce processeur.

17. Application selon la revendication 16, caractérisé en ce que, l'un des processus jouant un rôle de coordinateur, et d'autres processus, en communication avec celui-ci, un rôle d'esclave, les opérations menées au niveau de processus coordinateur comportent un prélude (60), une action (61), l'attente (62) de la réception d'un message « prêt à valider » venant de tous les esclaves, l'émission (63) d'un message valide ou avorté vers les esclaves, la transformation (64) d'une version provisoire d'objets ou informations en version définitive ou son effacement en cas d'avortement, et un postlude (65), tandis que les processus esclaves comportent un prélude (70), une action (72), l'envoi (73) d'un message « prêt à valider » au coordinateur, la réception (74) d'un message validé ou avorté en provenance du coordinateur, ainsi qu'un postlude (76A, 76B), procédé de la transformation (75) de la version provisoire en version définitive, lorsque le message reçu est « validé».

18. Application selon la revendication 17, caractérisé en ce qu'aussi bien dans le processus coordinateur que dans les processus esclaves, l'opération de transformation (64, 75) associée au postlude est répétée jusqu'à son exécution effective, et en ce que, aussi bien dans le processus coordinateur que dans les processus esclaves, une sauvegarde en mémoire stable (60-65) est effectuée entre chacune desdites opérations.

19. Application selon l'une des revendications 16 à 18, caractérisée en ce que, le système distribué étant un système d'enchères, le processus coordinateur est celui d'un vendeur, tandis que les processus esclaves sont ceux d'acheteurs, ces processus réalisant ensemble des activités élémentaires résidant chacune en une transaction commerciale.

## Claims

1. A data storage device of the type comprising :

- memory banks (Bi), addressable from the outside, provided with selective writing and reading commands and capable of forming part of the addressing space of a processor (AP) and

- access authorisation means (AT, Ri) associated with these memory banks and capable of designating a memory zone constituted on the one hand by at least one of the banks (Bi), selectively for a reading or writing operation, characterised in that the said banks (Bi) are entirely constituted by a live non-volatile memory, in that the said access authorisation (AT, Ri) is only valid for a single operation comprising writing and/or reading (Ri at « 00 », « 01 », « 10 » or « 11 »), the authorisation being exclusive and destroyed after the memory zone concerned has been addressed, in that the access authorisation means designate each time two memory banks (Bi) or coupled memory bank zones, in that for a complete and valid entry, the access authorisation means pass in sequence and without repetition at least through the following stages :

a) writing in the first zone ; the second zone inaccessible, for entering data coming from the processor into the first zone,

b) reading of the first zone, writing in the second zone for recopying the data from the first zone into the second.

2. A device according to claim 1, characterised in that the access authorisation means also have a reading stage in the two zones and in that an entry also comprises the verification, by reading the two zones (Bi), that their contents coincide.

3. A device according to one of claims 1 and 2, characterised in that a complete and valid reading is only obtained if the contents of the two memory banks (Bi) or of the zone of the coupled memory banks are identical.

4. A device according to one of claims 1 to 3, characterised in that the access authorisation means (AT, Ri ; 40-45) are arranged to break up an operation into elementary stages of reading and of writing of a group of elementary informations in the memory zones, whereof each stage cannot be interrupted.

5. A device according to one of claims 1 to 4, characterised in that the access authorisation means comprise locking means (AT, Ri ; 41-44).

6. A device according to one of claims 1 to 5, characterised in that the access authorisation means comprise for each memory bank, auxiliary memory units (Ri ; 44) arranged for selectively controlling the access to the whole or part of the the associated memory bank.

7. A device according to one of claims 1 to 6, characterised in that the access authorisation means comprise :

- key based access means capable of defining keys each designating one zone of one of the memory banks, and of subsequently responding to the introduction of one of the keys accompanied by a request for writing or reading, by an authorisation for writing or reading selectably applicable to the sole zone and to the sole memory bank defined by the said key, this authorisation being destroyed after any addressing of this memory zone or by the introduction of a new key.

8. A device according to claim 7, characterised in that the key based access means comprise :

- a key generator (AT ; 41), and
- right of access registers (Ri ; 44) which can be selectively enabled by one of the keys, each register having at least three states, whereof one is a state of rest, or of absence of the right of access, as well as two respective states of the rights of access to writing and reading, which states can only be taken up when the register is enabled, and

- each memory zone being controlled for its access by one of the respective registers, so as to respond to external addressing only if a writing or reading right of access has been notted in the register associated therewith for its control.

9. A method for the transfer of data between a processor (AP) and a data storage device (MRS), wherein the processor (AP) which comprises the data storage device (MRS) in its addressing space can only gain access to the latter through the access authorisation means (AT, Ri) associated with the memory banks (Bi) of the data storage device and which are capable of designating a memory zone constituted on the one hand by by at least one of the banks selectively for a writing and/or reading operation, characterised in that the data storage device is entirely constituted by a live nonvolatile memory, in that the said authorisation is only valid for a single operation constituted by the indivisible transfer of an elementary information group, the authorisation being exclusive and destroyed after the memory zone concerned has been addressed, in that the access authorisation means designate each time two memory banks (Bi) or coupled memory banks zones, and in that for a complete and valid entry, the access authorisation means pass in sequence and without repetition through at least two of the following stages :

a) writing in the first zone ; the second zone inaccessible, for entering data coming from the processor into the first zone,

b) reading of the first zone, writing in the second zone for recopying the data from the first zone into the second.

10. A method according to claim 9, characterised in that the access authorisation means also have a reading stage in the two zones and in that an entry also comprises the verification, by reading the two zones (Bi), that their contents coincide.

11. A method according to one of claims 9 and 10, characterised in that a complete and valid reading is only obtained if the contents of the two memory banks (Bi) or of the zone of the coupled memory banks are identical.

12. A method according to one of claims 9 to 11, characterised in that during an anomaly in writing in the first zone, one stops, and upon resumption, the second zone is recopied into the first, the writing operation not being effected, whilst during an anomaly in recopying the first zone into the second, one stops and upon resumption, the first zone is again recopied into the second, the writing operation being effected which obtains an atomic entry.

13. A method according to one of claims 9 to 12, wherein the processor is capable of executing several independent processes, characterised in that with each process there is simultaneously associated a pair of zones appertaining to two separate memory banks.

14. A method according to claim 13, characterised by the following operations of the processor :

a) upon each demand for fresh memory for a process, allocating to the latter a free memory zone and generating a key associated with this zone, whilst communicating to the said process only this zone and the physical address of the said memory zone, and

b) executing writing or reading operations for the said process only if preceded by an access opening instruction comprising the key assigned to the zone and to the kind of operation : writing or reading, which has the effect of authorising physical access solely to the zone designated for writing or reading respectively.

15. A method according to one of claims 9 to 14, wherein the processor is moreover associated with a permanent type disc memory (UD), characterised in that only the data extracted from the rapid data storage device (MRS) are transferred into the disc memory (UD).

16. Application of the device and/or of the method according to one of the preceding claims to a data processing system comprising a plurality of processors (AP) interconnected by a common intercommunication medium, and capable of each executing one or several independent processes, characterised in that each of the said processors (AP) is associated with a permanent memory (MRS) according to one of the preceding claims, to save the variables used by the process or processes executed on this processor.

17. Application according to claim 16, characterised in that one of the processes performing a coordinating function and other processes being in communication therewith, a slave function, the operations managed at the level of the coordinating process comprise a prelude 60, an action 61, waiting (62) for receipt of a « ready to validate » message coming from all the slaves, the transmission (63) of a valid or aborted message towards the slaves, the transformation (64) of a provisional version of objects or information into a definite version, or its deletion in the event of aborting, and a postlude (65), whilst the slave processes comprise a prelude (70), an action (72), the sending (73) of a « ready to validate » message to the coordinator, the receipt (74) of a validated or aborted message coming from the coordinator, as well as a postlude (76A, 76B), preceded by the transformation (75) of the provisional version into a definite version when the message received is « validated ».

18. Application according to claim 17, characterised in that both in the coordinating process and in the slave processes, the transformation operation (64, 74) associated with the postlude is repeated until its effective execution, and in that both in the coordinating process and in the slave processes a saving operation into permanent memory (60-65) is effected between each one of the said operations.

19. Application according to one of claims 16 to 18, characterised in that the network system being an auction system, the coordinating process is that of a seller, whilst the slave processes are those of buyers, these processes effecting together elementary activities, each based on a commercial transaction.

**Patentansprüche**

1. Vorrichtung zur Speicherung von Daten, enthaltend :

Speicherbänke (Bi), die von außen adressierbar sind, und die mit selektiven Schreib- und Lesebefehlen versorgt werden und die in der Lage sind, an dem Adressierraum eines Prozessors (AP) teilzunehmen, und

Zugangsberechtigungsmittel (AT, Ri), die diesen Speicherbänken zugeordnet sind und die dazu geeignet sind, eine Speicherzone zu bezeichnen, die wenigstens zum Teil von wenigstens einer der Bänke (Bi) gebildet ist, selektiv für einen Schreib- oder Lesebetrieb,
dadurch gekennzeichnet, daß die genannten Bänke (Bi) vollständig aus nicht-flüchtigen Schnellspeichern gebildet sind, daß die genannte Zugriffsberechtigung (AT, Ri) nur für einen einzigen Betrieb gilt, der Schreiben und/oder Lesen enthält (Ri bis « 00 », « 01 », « 10 » oder « 11 »), wobei die Berechtigung ausschließlich ist und nach der Adressierung der betreffenden Speicherzone zerstört wird, und daß die Zugangsberechtigungsmittel jedesmal zwei Speicherbänke (Bi) oder gekoppelte Zonen von Speicherbänken bezeichnen, und daß für das vollständige und gültige Einschreiben die Zugangsberechtigungsmittel in der folgenden Reihenfolge und ohne Wiederholung wenigstens die zwei nachfolgenden Zustände durchlaufen :

a) Einschreiben in die erste Zone ; die zweite Zone ist nicht zugänglich, um die von dem Prozessor abgegebenen Daten in die erste Zone einzuschreiben,

b) Auslesen der ersten Zone, Einschreiben in die zweite Zone, um die Daten von der ersten Zone in die zweite Zone umzukopieren.

2. Vorrichtung nach Anspruch 1, dadurch gekennzeichnet, daß die Zugangsberechtigungsmittel auch einen Lesezustand in den zwei Zonen besitzen und daß eine Auslesung auch die Prüfung durch Lesung der zwei Zonen (Bi) enthält, daß ihre Inhalte übereinstimmen.

3. Vorrichtung nach einem der Ansprüche 1 und 2, dadurch gekennzeichnet, daß eine vollständige und gültige Auslesung nur dann erhalten wird, wenn die Inhalte der zwei Speicherbänke (Bi) oder gekoppelten Speicherbankzonen identisch sind.

4. Vorrichtung nach einem der Ansprüche 1 bis 3, dadurch gekennzeichnet, daß die Zugangsberechtigungsmittel (AT, Ri ; 40-45) so betätigt sind, daß sie einen Betrieb in Lese- und Schreibelementarphasen einer Gruppe von Elementarinformationen in den Speicherzonen zerlegen, wobei keine Phase unterbrochen werden kann.

5. Vorrichtung nach einem der Ansprüche 1 bis 4, dadurch gekennzeichnet, daß die Zugangsberechtigungsmittel Verriegelungsmittel (AT, Ri ; 41-44) enthalten.

6. Vorrichtung nach einem der Ansprüche 1 bis 5, dadurch gekennzeichnet, daß die Zugangsberechtigungsmittel für jede Speicherbank Hilfsspeicherorgane (Ri ; 44) enthalten, die so betätigt sind, daß sie selektiv den Zugang zu der gesamten zugehörigen Speicherbank oder einem Teil derselben steuern.

7. Vorrichtung nach einem der Ansprüche 1 bis 6, dadurch gekennzeichnet, daß die Zugangsberechtigungsmittel enthalten :

Schlüsselzugangsmittel (40-43), die dazu geeignet sind, Schlüssel zu definieren, die jeweils eine Zone einer der Speicherbänke bezeichnen, und dann auf die Einführung eines der Schlüssel anzusprechen, begleitet von einem Schreib- oder Lesebefehl, durch eine Schreib- oder Leseberechtigung, die selektiv an der einzigen Zone oder der einzigen Speicherbank anwendbar sind, die durch den genannten Schlüssel bezeichnet sind, wobei diese Berechtigung nach jeder Adressierung dieser Speicherzone oder durch Einführung eines neuen Schlüssels zerstört wird.

8. Vorrichtung nach Anspruch 7, dadurch gekennzeichnet, daß die Schlüsselzugangsmittel enthalten :

einen Schlüsselgenerator (AT ; 41), und

Zugangsrechtregister (Ri ; 44), die durch einen der Schlüssel berechtigt sein können, wobei jedes Register wenigstens drei Zustände besitzt, von denen einer ein Ruhe- oder Zugangsrechtsabwesenheitszustand ist und die beiden anderen ein Schreibzugangsrechts- und ein Lesezugangsrechtszustand sind, wobei die Zustände nur dann eingerichtet werden können, wenn das Register berechtigt ist, und wobei jede Speicherzone für ihren Zugang durch ein entsprechendes der Register so gesteuert ist, daß es nur dann auf die äußere Adressierung anspricht, wenn ein Schreib- oder Lesezugangsrecht in das Register eingeschrieben ist, das ihr für ihre Steuerung zugeordnet ist.

9. Verfahren zum Übertragen von Daten zwischen einem Prozessor (AP) und einer Datenspeichervorrichtung (MRS), bei dem der Prozessor (AP), der die Datenspeichervorrichtung (MRS) in seinem Adressierraum enthält, zu diesem nur über Zugangsberechtigungsmittel (AT, Ri) Zugang hat, die den Speicherbänken (Bi) der Datenspeichervorrichtung zugeordnet sind und die dazu geeignet sind, eine Speicherzone zu bezeichnen, die zum Teil wenigstens von einer der Bänke gebildet ist, selektiv für einen Schreib- und/oder Lesebetrieb, dadurch gekennzeichnet, daß die Speichervorrichtung vollständig aus nichtflüchtigem Schnellspeicher besteht, daß die Berechtigung nur für einen einzigen Betrieb gilt, der aus der unteilbaren Übertragung einer Gruppe elementarer Informationen besteht, wobei die Berechtigung exklusiv ist und nach der Adressierung der betreffenden Speicherzone zerstört wird, und daß die Zugangsberechtigungsmittel jedesmal zwei Speicherbänke (Bi) oder gekoppelte Speicherbankzonen bezeichnen, und daß für das vollständige und gültige Einschreiben die Zugangsberechtigungsmittel in der angegebenen Reihenfolge und ohne Wiederholung wenigstens die zwei folgenden Zustände durchlaufen :

a) Einschreiben in die erste Zone ; die zweite Zone ist nicht zugänglich, um die vom Prozessor abgegebenen Daten in die erste Zone einzuschreiben,

b) Lesen der ersten Zone, Schreiben in die zweite Zone, um die Daten aus der ersten Zone in die zweite Zone zu rekopieren.

10. Verfahren nach Anspruch 9, dadurch gekennzeichnet, daß die Zugangsberechtigungsmittel auch einen Lesezustand in den zwei Zonen besitzen und daß eine Einschreibung auch die Prüfung durch Lesung der zwei Zonen (Bi), daß ihre Inhalte übereinstimmen, umfaßt.

11. Verfahren nach einem der Ansprüche 9 und 10, dadurch gekennzeichnet, daß eine vollständige und gültige Lesung nur erhalten wird, wenn die Inhalte der zwei Speicherbänke (Bi) oder der gekoppelten Speicherbankzonen identisch sind.

12. Verfahren nach einem der Ansprüche 9 bis 11, dadurch gekennzeichnet, daß man bei einer Anomalie beim Einschreiben in der ersten Zone abbricht, und daß man bei der Wiederholung die zweite Zone in die erste rekopiert, wobei der Schreibbetrieb nicht ausgeführt wird, während bei einer Anomalie beim Rekopieren von der ersten Zone in die zweite Zone man abbricht, und bei der Wiederholung man die erste Zone in die zweite von neuem rekopiert, wodurch der Einschreibbetrieb ausgeführt ist, was ein atomares Einschreiben realisiert.

13. Verfahren nach einem der Ansprüche 9 bis 12, bei dem der Prozessor dazu geeignet ist, mehrere unabhängige Prozesse auszuführen, dadurch gekennzeichnet, daß jedem Prozeß gleichzeitig ein Paar Zonen zugeordnet ist, die in zwei bestimmten Speicherbänken erscheinen.

14. Verfahren nach Anspruch 13, gekennzeichnet durch die folgenden Operationen des Prozessors :

a) bei jedem neuen Speicherbefehl eines Prozesses Zuweisen einer freien Speicherzone an diesen und Erzeugen eines dieser Zone zugeordneten Schlüssels, wobei dem genannten Prozeß nur dieser Schlüssel und die physikalische Adresse der genannten Speicherzone übermittelt wird, und

b) Ausführen des Schreib- oder Lesebetriebs für den genannten Prozeß nur dann, wenn ein Zugangsöffnungsbefehl vorangeht, der den Schlüssel enthält, der der Zone und der Art zugeordnet ist ; Einschreiben oder Lesen des Betriebs, was den Zweck hat, den physikalischen Zugang zu einer einzigen bezeichneten Zone zum Einschreiben bzw. Lesen zu gestatten.

15. Verfahren nach einem der Ansprüche 9 bis 14, bei dem der Prozessor weiterhin einer Plattenspeichereinheit vom dauerhaften Typ (UD) zugeordnet ist, dadurch gekennzeichnet, daß nur die Daten, die von der Speichervorrichtung für schnelle Daten (MRS) entnommen werden, in die Plattenspeichereinheit (UD) übertragen werden.

16. Anwendung der Vorrichtung und/oder des Verfahrens nach einem der vorhergehenden Ansprüche auf ein unterteiltes Informationssystem, das mehrere Prozessoren (AP) enthält, die mittels eines gemeinsamen Übertragungsmediums miteinander verbunden und dazu eingerichtet sind, jeweils einen oder mehrere unabhängige Prozesse auszuführen, dadurch gekennzeichnet, daß jeder der Prozessoren (AP) einem stabilen Speicher (MRS) gemäß einem der vorhergehenden Ansprüche zugeordnet ist, um die Variablen zu sichern, die in dem oder den von diesem Prozessor ausgeführten Prozess (en) verwendet werden.

17. Anwendung nach Anspruch 16, dadurch gekennzeichnet, daß, wenn einer der Prozesse die Rolle eines Koordinators spielt und von anderen damit verbundenen Prozessen einer eine Tochterrolle spielt, die auf Höhe des Koordinatorprozesses ausgeführten Operationen eine Einleitung (60), eine Aktion (61), das Warten (62) auf den Empfang einer Sendung « Bereit zum Gültigmachen », die von allen Töchtern kommt, das Aussenden (63) einer gültigen oder verkümmerten Mitteilung an die Töchter, die Transformation (64) einer provisorischen Version von Objekten oder von Informationen in endgültiger Version oder ihre Löschung im Falle einer Verstümmelung und ein Nachspiel (65) umfassen, während die Tochterprozesse eine Einleitung (70), eine Aktion (72), die Aussendung (73) einer Mitteilung « Bereit zum Gültigmachen » an den Koordinator, den Empfang (74) einer gültigen oder verstümmelten Mitteilung, die vom Koordinator stammt, sowie ein Nachspiel (76A, 76B), ein Transformationsverfahren (75) für die vorläufige Version in endgültiger Version umfassen, wenn die empfangene Mitteilung « gültig » ist.

18. Anwendung nach Anspruch 17, dadurch gekennzeichnet, daß im Koordinatorprozeß wie auch in den Tochterprozessen der dem Nachspiel zugeordnete Transformationsbetrieb (64, 75) bis zu seiner wirksamen Ausführung wiederholt wird, und daß sowohl im Koordinatorprozeß als auch in den Tochterprozessen eine Sicherung des stabilen Speichers (60-65) zwischen jedem der genannten Betriebe ausgeführt wird.

19. Anwendung nach einem der Ansprüche 16 bis 18, dadurch gekennzeichnet, daß, wenn das verteilte System ein Versteigerungssystem ist, der Koordinatorprozeß der eines Verkäufers ist, während die Tochterprozesse die von Käufern sind, wobei diese Prozesse zusammen die Elementaraktivitäten bilden, die jeweils in einer kommerziellen Transaktion vorliegen.

FIG.1

FIG.2

1

FIG. 3

FIG. 4

FIG. 5

(8×) TAMPON 40

(3×)  (2×)
(3×)  VALIDATION
DECODEUR 42

(8×)
(5×)

TABLE D'ACCES 41

PORTES 43

BISTABLES 44

MULTIPLEXEUR D'ECRITURE 45 → WSEL

ADMSB

MULTIPLEXEUR DE LECTURE 46 → RDSEL

ADBM

ADMSB → DECODEUR 59

RDSEL

DD ← TAMPON 50

WSEL → B1 51

WSEL → B8 58

EP 0 160 028 B1

# FIG. 6

$c_0$ →

PRELUDE — 60

$c_1$ →

ACTION ↻ $\omega$ — 61

$c_2$ →

RECEPTION DE "PRET A VALIDATION" VENANT DES ESCLAVES — 62

$c_3$ →

EMISSION DE "VALIDE" / "AVORTE" VERS LES ESCLAVES — 63

$c_4$ →

VERSION PROVISOIRE → VERSION DEFINITIVE — 64

$c_5$ →

POSTLUDE — 65

FIG. 7

$C_0$

PRELUDE — 70

$C_1$

ACTION — 72 — $\omega$

$C_2$

ENVOIE "PRET A VALIDATION" AU COORDINATEUR — 73

$C_3$

RECOIT "VALIDE"/"AVORTE" DU COORDINATEUR — 74

$C_4$  AVORTE    VALIDE

$C_5$

POST LUDE — 76A

VERSION PROVISOIRE → VERSION DEFINITIVE — 75

$C_5$

POST LUDE — 76B